# EUROPEAN PATENT APPLICATION

(11) **EP 4 104 676 A1**
(43) Date of publication of application: **21.12.2022**
(21) Application number: 21180232.7
(22) Date of filing: 18.06.2021
(51) Int. Cl.: A01K 29/00

(54) **METHOD AND SYSTEM FOR MONITORING ESTRUS AND OVULATION**

(71) Applicant: Minitüb GmbH, 84184 Tiefenbach (DE)
(72) Inventor: Simmet, Christian, 84036 Landshut (DE); Griebl, Ludwig, 84174 Berghofen (DE)
(74) Representative: Grahn, Sibylla Maria

(57) **Abstract**

This invention relates to a method for monitoring estrus and ovulation, and for determining time for insemination of an animal, preferably a pig. The present invention furthermore relates to a system for monitoring estrus and ovulation, and for determining time for insemination of an animal, preferably a pig.

## Description

This invention relates to a method for monitoring estrus and ovulation, and for determining time for insemination of an animal, preferably a pig. The present invention furthermore relates to a system for monitoring estrus and ovulation, and for determining time for insemination of an animal, preferably a pig.

### BACKGROUND OF THE INVENTION

Around 700 million pigs are kept as livestock worldwide. For the coming years, a growing trend is forecast with the global meat consumption of 313 million t in 2019 rising to approx. 346 million t in 2022. To meet the need pig farms are organizing themselves more and more in large farms around the world, often over 5,000 sows and several hundred crates used for artificial insemination (AI), whose occupancy can change on a weekly basis. The economic operation of such systems will depend in the future from the increasing automation and digitization of operational processes via "smart farming".

Estrus detection, together with effective targeting of the right time for insemination, are the key components for efficient breeding of animals. This part of the herd management has a significant impact on herd profitability. Today, the heat checking of the sows by triggering immobilization in response to backpressure from a person (the standing response) to determine the optimal time for insemination is the most common method worldwide, followed by hormonal synchronization methods. However, the latter is questioned critically in Europe, in particular. Especially for large companies, the regular check of the sows'standing response is a major challenge, since checking several hundred sows at regular intervals requires specific skills and a lot of time. In most of the countries with intensive animal production systems the lack of skilled workers and a high fluctuation of farm staff is a growing problem, therefore these farms have a high demand for an automated, technical solution for the determination of the optimal time for insemination.

In particular, in order to achieve optimal reproductive performance, sow insemination has to happen within a relatively short time in the sow's estrus period. Studies have shown that the ideal time is approximately up to twenty-four hours before ovulation, which occurs in general at the beginning of the last third of estrus period. For the producer this ideal time is entirely theoretical because he does not know how long the estrus period will be and when ovulation will occur. It usually lasts between 40 and 60 hours but it can be as short as 24 hours, or even extend up to 96 hours and more. In short, managers of breeding operations find it challenging to inseminate the sows at the right moment in their estrus period.

To ensure fertilization of each sow, researchers often recommend doing two inseminations per estrus. Producers adapt these recommendations and develop various procedures that often require two and sometimes three or four inseminations per estrus period. Generally, a first insemination is performed at the first behavioral symptoms associated with estrus, followed by another insemination every following 24-hour period up to cessation of the standing response. This method gives good results, provided that good estrus detection has taken place. For this reason, it requires the presence of skilled employees as well as the use of multiple doses of semen, which results in increased workload and higher spending on the purchase of doses of semen. Other producers find it hard to pinpoint the ideal time, which leads to reduced fertility and smaller litter sizes, and a subsequent falloff in herd productivity.

US patent 8,551,012 discloses a method for monitoring estrus by detecting the posture of an animal, in particular its standing time. CN 109984054 describes a heat detection method and device wherein a sow's standing index and restlessness index is generated from said sow's movement information. Together with a predictive index, estrus probability is generated. It is detected whether the sow is standing or lying.

There is a need in the art for improved methods and means for determining the time of insemination for livestock.

### SUMMARY OF THE INVENTION

According to the present invention this object is solved by a method for determining estrus and ovulation of an animal / for determining time for insemination, comprising the steps of
(1) monitoring at least one animal from above the crate or pen using at least one camera, which comprises collecting images at time points over a period of time;
(2) at each time point, obtaining the grey value in each pixel of the collected image;
(3) comparing the grey value of each pixel of the images of two consecutive time points and obtaining an activity value for each image by summing up the changes over all pixels;
(4) repeating steps (1) to (3) for an activity interval of time and obtaining a sample of activity values for said activity interval of time and then extracting from said sample of activity values a statistical estimator;
(5) repeating steps (1) to (4) and comparing the value of the statistical estimator for said sample of activity values of said activity interval of time with the value of the statistical estimator of a sample of activity values of the respective activity interval of time 24 hours ago, thereby obtaining a difference value;
(6) repeating step (5) at time differences over said period of time, thereby obtaining a time series of the difference values over said period of time; and
(7) determining estrus and ovulation time of the animal from the time series of the difference values.

According to the present invention this object is solved by a system for determining estrus and ovulation of an animal / for determining time for insemination, comprising
(a) at least one camera which is located above the crate or pen for monitoring at least one animal from above, which collects images at time points over a period of time;
(b) means for transferring the images to a processor;
(c) at least one processor for obtaining and comparing the grey values of the images collected with the at least one camera;
(d) a software for carrying out steps (2) to (7) of the method of the present invention;
(e) optional, means for sending a signal that the animal is in estrus to the farmer.

### DESCRIPTION OF THE PREFERRED EMBODIMENTS OF THE INVENTION

Before the present invention is described in more detail below, it is to be understood that this invention is not limited to the particular methodology, protocols and reagents described herein as these may vary. It is also to be understood that the terminology used herein is for the purpose of describing particular embodiments only, and is not intended to limit the scope of the present invention which will be limited only by the appended claims. Unless defined otherwise, all technical and scientific terms used herein have the same meanings as commonly understood by one of ordinary skill in the art. For the purpose of the present invention, all references cited herein are incorporated by reference in their entireties.

Concentrations, amounts, and other numerical data may be expressed or presented herein in a range format. It is to be understood that such a range format is used merely for convenience and brevity and thus should be interpreted flexibly to include not only the numerical values explicitly recited as the limits of the range, but also to include all the individual numerical values or sub-ranges encompassed within that range as if each numerical value and sub-range is explicitly recited. As an illustration, a numerical range of "1 to 30" should be interpreted to include not only the explicitly recited values of 1 to 30, but also include individual values and sub-ranges within the indicated range. Thus, included in this numerical range are individual values such as 1, 2, 3, 4, 5, 6, 7, 8, 9, 10, 11, 12, 13... 27, 28, 29, 30 and sub-ranges such as from 10 to 30, from 5 to 20 and 11 to 15, etc. This same principle applies to ranges reciting only one numerical value, such as "about 10". Furthermore, such an interpretation should apply regardless of the breadth of the range or the characteristics being described. Also it is to be understood that ranges may differ depending on the institute/facility where the measurements are being performed, methodology of measurement, type of tissue, and technique of tissue collection.

### Method for determining the time for insemination

The present invention provides a method for determining estrus and ovulation of an animal. The method of the present invention is thus a method for determining the time for insemination.

The method of the present invention determines circadian activity evolution (CAE). The term "circadian activity" refers to an animal's behavior or evolution within a time period of 24 hours.

Said method comprises the steps of
(1) monitoring at least one animal from above the crate or pen using at least one camera, which comprises collecting images at time points over a period of time;
(2) at each time point, obtaining the grey value in each pixel of the collected image;
(3) comparing the grey value of each pixel of the images of two consecutive time points and obtaining an activity value for each image by summing up the changes over all pixels between said two images;
(4) repeating steps (1) to (3) for an activity interval of time and obtaining a sample of activity values for said activity interval of time and then extracting from said sample of activity values a statistical estimator;
(5) repeating steps (1) to (4) and comparing the value of the statistical estimator for said sample of activity values of said activity interval of time with the value of the statistical estimator of a sample of activity values of the respective activity interval of time 24 hours ago, thereby obtaining a difference value;
(6) repeating step (5) at time differences over said period of time, thereby obtaining a time series of the difference values over said period of time; and
(7) determining estrus and ovulation time of the animal from the time series of the difference values.

### Step (1)

In step (1), at least one animal is monitored from above the crate or pen using at least one camera.
Said at least one camera collects images at time points over a period of time.

The term "image" as used herein refers to a single image and to images obtained from a video sequence.

The animal is preferably a pig, a cow, a sheep, more preferably a pig.

The period of time is preferably in a range from two days to one month, more preferably two days to 23 days, even more preferably three to seven days.
In one example, the period of time is four days.

In a preferred embodiment, the period of time starts with stabling the animal, such as stabling the sow. Stabling means in this context transferring the sow from the farrowing pen to the pen or crate in the breeding area for heat checking and artificial insemination. This transfer is usually combined with weaning (removing the piglets from the sow, thus finishing the lactation period), which triggers the physiological events to start the next estrus cycle. For gilts and other sows like repeat breeders, stabling means also the transfer from the previous pen to the pen or crate in the breeding area.

When referring to a "crate" in this application, individual housing of the animals is referred to. When referring to a "pen" in this application, group housing of the animals is referred to.

The time points in said period of time are preferably in a range from every second to every hour, more preferably every second to every 30 seconds, even more preferably every 5 to 20 seconds.
In one example, the time points are every 10 seconds.

In a preferred embodiment of individual housing, one camera collects images for 4 to 5 crates.

In an embodiment of group housing, more than one camera can be useful.

### Step (2)

In step (2), at each time point, the grey value in each pixel of the collected image is obtained.

The term "grey value" as used herein refers to the brightness of a pixel, wherein the color and/or RGB composition of the pixel is not considered.

The recorded images are analyzed as grey value images. Thereby it is not of interest whether the animal, such as the sow, is standing or laying.

Preferably, the grey value of the image is determined within a region of interest (ROI) of said image. In an embodiment of individual housing, such ROI is determined as the area in each crate the camera can observe from above and take images of the animal (e.g. the sow) in the crate.

### Step (3)

In step (3), the grey value of each of the pixel of the images of two consecutive time points is compared, thereby an activity value is obtained for each image by summing up the changes over all pixel.

### Step (4)

Steps (1) to (3) are repeated for an activity interval of time, thereby creating a sample of activity values within this interval of time. By repeating steps (1) to (3) for an activity interval of time a sample of activity values for said activity interval of time is obtained.

Preferably, the activity interval of time is in a range from one hour to 10 hours, more preferably 2 to 6 hours.
In one example, the activity interval of time is 4 hours.

In step (4), the activity values obtained in (3), i.e. said sample of activity values obtained therefrom, are analyzed by extracting a statistical estimator from said sample of activity values.

### Step (5)

Steps (1) to (4) are repeated.
The value of the statistical estimator for said sample of activity values of said activity interval of time, as obtained in step (4), is compared with the value of the statistical estimator of a sample of activity values of the respective activity interval of time 24 hours ago.

Thereby, a difference value is obtained.
Said difference value shows the difference of the activity of the animal within said activity interval of time of one day compared to the day before, such as of today compared to yesterday, i.e. 24 hours ago. Said difference value describes changes in animal behavior 24 hours ago. Said difference value reflects the change in activity of the individual animal in its circadian rhythm.

The method of the present invention is based on said circadian comparison.
Thereby, the actual behavior of the animal (e.g. the sow) is compared with its own behavior one day (24 hours) before.

### Step (6)

Step (5) is repeated at time differences over said period of time, thereby obtaining a time series of the difference values over said period of time.

The time differences are preferably in a range from one minute to 6 hours, more preferably one minute to one hour, even more preferably 10 to 45 minutes.
For example, the time differences are 30 minutes.

The difference values are determined in a "rolling manner".
For example, in case the time differences are 30 minutes: 48 difference values are determined within 24 hours.

### Step (7)

In step (7), estrus and ovulation time of the animal is obtained from the time series of the difference values, such time series showing the difference values over the period of time.

The ovulation time which is obtained in step (7) refers to a period of time, such as several hours, e.g. four hours, six hours, eight hours or an interval of time from e.g. 10 am to 6 pm.

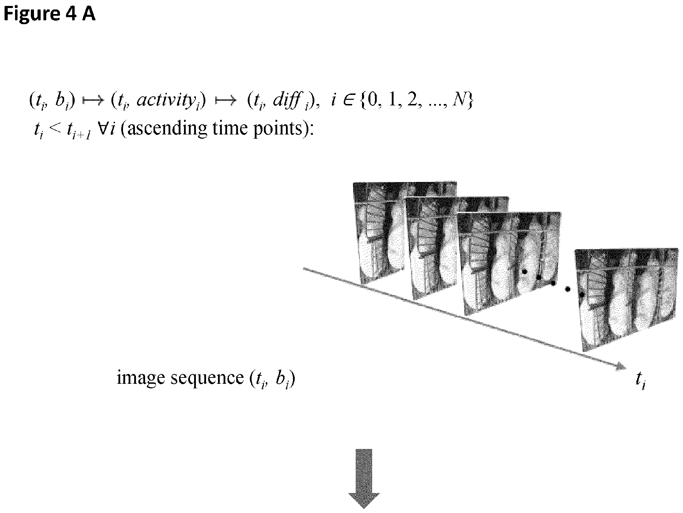

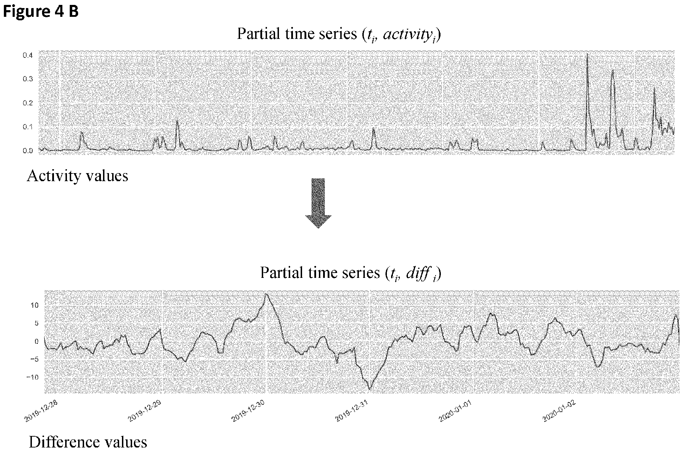

The method of the present invention is based on transformations and compressions of time series.
Starting from image *bᵢ*, different transformations and compressions of time series are carried out in order to extract sufficient information to forecast biologically relevant time points. *(tᵢ, bᵢ)* ↦ *(tᵢ, activityᵢ)* ↦ *(tᵢ, dᵢ□sᵢ), i ∈ {*0*,* 1, 2, ..., *N*} *tᵢ < t*_{*i*+*1*} ∀*i* (ascending time points). See also Figure 4 where the time series transformation is shown according to the method of the present invention.

Further details of a preferred transformation:
- Images *bᵢ*: starting from optical image collection (video/images): determine at time points *tᵢ* image *bᵢ* = 2-dimensional image/array:
   *(tᵢ, bᵢ)*
   Compression (typical): *Δt = t*_{*i*+*1*} - *tᵢ = 10 sec.*
- Activity values *activityᵢ*: Transformation *bᵢ* -→ Activity:
   *(tᵢ, activityᵢ)*
   with *activity,* = relative difference of two consecutive images *bᵢ₋₁, bᵢ.*
   Compression (typical): *Δt* = *t*_{*i*+*1*} - *tᵢ* = *10 sec*
- Difference values *di□sᵢ*: Transformation Activity → Di□s:
   *(tᵢ, di□ ᵢ*)
   with *di□* ᵢ = comparison of the statistical estimator of two intervals
   - activities in interval [*tᵢ* - 4 h, *tᵢ*] and
   - activities in interval [*tᵢ* - 4 h - 24 h, *tᵢ* - 24 h].
   For example: t-value for mean values of the intervals.
   Comparison of actual behavior of the animal (e.g. sow) with respect to its own behavior one day or (integer number) several day(s) before.
   Compression (typical): *Δt* = *t*_{*i*+*1*} - *tᵢ* = 30 minutes.

The method of the present invention, i.e. the algorithm underlying the method of the present invention, was trained using a learning sample consisting of a group of animals which were phenotypically very well characterized. Thereby, the time series *di□sᵢ* were correlated with the phenotypes of the learning sample, i.e. the time of ovulation observed in the sows of the learning sample.
In such learning sample, the mating behavior, estrus and ovulation can be determined with known methods in the art, such as
- Subjective evaluation of signs of estrus and estrus behavior by the animal caretaker
- Ultrasound examination of the animals, e.g. ultrasound scan of the sows' ovaries every 8 hours,
- Determining the hormone profile, e.g. in samples of blood, saliva or urine.
For example, the present invention was carried out using subjective evaluation of signs of estrus and estrus behavior as well as ultrasound scans of the sows'ovaries every eight hours in order to determine the onset of estrus and the moment of ovulation with a precision of +/- 4 hours.

The method of the present invention allows to predict from the time series *di□sᵢ* a target value, such as an ovulation time and/or best time of insemination,
Particularly, the present invention allows to predict from a (relatively) short sequence *(di□sᵢ)* a target value in the future.
For this, the time series *di□sᵢ* can be analyzed with different mathematical tools, such as linear regression, metrics and others.

Preferably, the period of time starts with stabling the animal, such as stabling the sow. Stabling means in this context transferring the sow from the farrowing pen to the pen or crate in the breeding area for heat checking and subsequent artificial insemination. This transfer is usually combined with weaning (removing the piglets from the sow, thus finishing the lactation period), which triggers the physiological events to start the next estrus cycle. For gilts and other sows like repeat breeders, stabling means also the transfer from the previous pen to the pen or crate in the breeding area.

Preferably, further information about the animal is used, such as age, number of former pregnancies, number of offspring per pregnancy, back fat thickness to define the moment for insemination.

In a preferred embodiment, the method of the invention further comprises the steps
(8) sending a signal that the animal is in estrus to the farmer, and/or
(9) optional, recommending the time of insemination, and/or
(10) optional, recommending the lowest number of inseminations possible to achieve a pregnancy in this estrous cycle, and/or
(11) optional, monitoring of health status.

In a preferred embodiment, the method of the invention further comprises monitoring of the success of artificial insemination and/or predicting the probability of early pregnancy.

### System for determining the time for insemination

The present invention provides a system for determining estrus and ovulation of an animal. The system of the present invention is thus a system for determining the time for insemination. The system of the present invention is suitable for individual housing as well as for group housing of animals.

Said system comprises
(a) at least one camera which is located above the crate or pen for monitoring at least one animal from above, which collects images at time points over a period of time;
(b) means for transferring the images to a processor;
(c) at least one processor for obtaining and comparing the grey values of the images collected with the at least one camera;
(d) a software for carrying out steps (2) to (7) of the method of the present invention;
(e) optional, means for sending a signal that the animal is in estrus to the farmer.

Preferably in an embodiment of individual housing, one camera collects images for 4 to 5 crates.

The animal is preferably a pig, a cow, a sheep, more preferably a pig.

The period of time is preferably in a range from two days to one month, more preferably two days to 23 days, even more preferably three to seven days.
In one example, the period of time is four days.

In a preferred embodiment, the period of time starts with stabling the animal, such as stabling the sow. Stabling means in this context transferring the sow from the farrowing pen to the pen or crate in the breeding area for heat checking and subsequent artificial insemination. This transfer is usually combined with weaning (removing the piglets from the sow, thus finishing the lactation period), which triggers the physiological events to start the next estrus cycle. For gilts and other sows like repeat breeders, stabling means also the transfer from the previous pen to the pen or crate in the breeding area.

The time points in said period of time are preferably in a range from every second to every hour, more preferably every second to every 30 seconds, even more preferably every 5 to 20 seconds, such as every 10 seconds.
For example, the time points are every 10 seconds.

The software of the system carries out steps (2) to (7) of the method of the present invention.

The method of the present invention determines circadian activity evolution (CAE) of the animal, as disclosed herein.

In one embodiment, the system of the present invention comprises means for sending a signal that the animal is in estrus to the farmer.
Said means preferably also send a proposed time of insemination to the farmer.

The following examples and drawings illustrate the present invention without, however, limiting the same thereto.

### BRIEF DESCRIPTION OF THE DRAWINGS

**Figure 1****.** shows the setup of a camera above the crates in a sow barn's breeding area, as used in the method of the present invention.

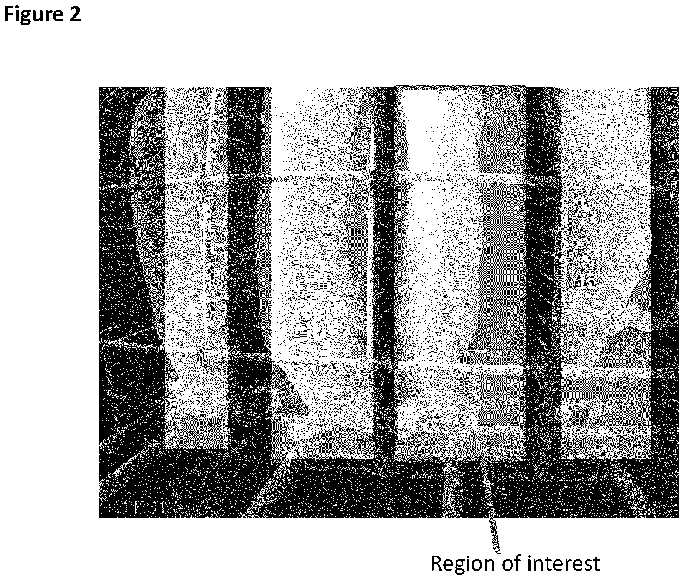

**Figure 2** shows an image taken from above 4 crates and the respective region of interest (ROI).

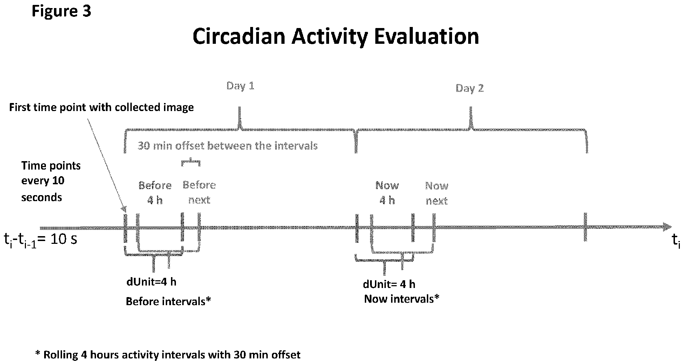

**Figure 3** shows a time scale over 48 hours for the method of the present invention. The circadian activity evaluation as one key element of the present invention is illustrated by the time spans under the headers Day 1 and Day 2 following each other on the time beam of one sow. Consecutive time points are bundled into rolling 4 hours activity intervals with a 30 min offset, allowing the comparison of a given interval of today (Day 2) with the same period of time yesterday (Day 1). The 30 min offset between two consecutive activity intervals provides 48 activity intervals to be analyzed within one day.
**Figure 4** shows the time series transformation carried out according to the method of the present invention.
   A, Raw data /grey values are acquired from the images taken by the camera.
   B, Upper graph, from the grey values, activity values *(tᵢ, activityᵢ)* are determined by summing up the changes over all pixels between the images from two consecutive time points. Shown is a time period of about 4 hours.

Lower graph, by comparing the value of a statistical estimator for an activity interval of time with the value of a statistical estimator of the respective activity interval of time 24 hours ago, difference values are obtained *(tᵢ, diffs ᵢ).*

### EXAMPLES

### Example 1

The learning sample consisted of 85 sows from a commercial sow farm in Germany. The sows were all housed in accordance with the respective regulatory guidelines and laws for animal keeping in Germany. All sows were weaned on the day of being stabled in the crates of the breeding area.

Sows of the learning sample were randomly selected from the group of weaned sows of that week, providing a variety of ages and performance records of previous breedings to the learning sample.

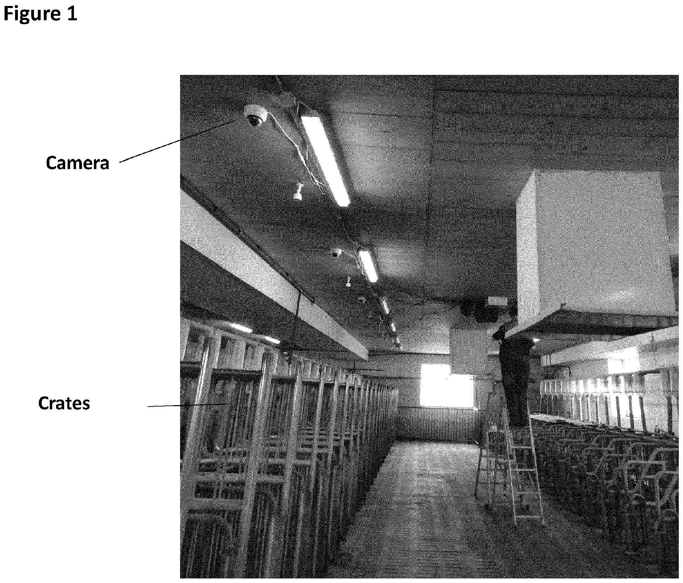

Sows were under constant surveillance from the cameras as shown in Figure 1. Ultrasound examinations were performed 3 times a day from day 4 until day 8 after entering the breeding area. Ultrasound was done at 7:00, 15:00 and 23:00 using a MyLab One ultrasound scanner with transabdominal 5 Mhz sector scanner with Doppler effect from esaote. This examination schedules covers the period of time in which the sows most probably will ovulate. Recording of the ovarian status from each examination, estrus behavior and time of insemination as determined according to the subjective evaluation of the animal caretaker were done in order to provide a complete characterization of the reproductive behavior of the sows in the learning sample.

Surveillance cameras model VIO-DP20 from Blaupunkt were used to take the images at every time point, each camera taking images from up to a maximum of 5 sows. The images are transmitted via Ethernet connection to a network storage (NAS) from QNAP and provided there for the evaluation. The evaluation takes place on an external PC connected to the NAS.

The features disclosed in the foregoing description, in the claims and/or in the accompanying drawings may, both separately and in any combination thereof, be material for realizing the invention in diverse forms thereof.

## Claims

1. A method for determining estrus and ovulation of an animal / for determining time for insemination, comprising the steps of
(1) monitoring at least one animal from above the crate or pen using at least one camera,
which comprises collecting images at time points over a period of time;
(2) at each time point, obtaining the grey value in each pixel of the collected image;
(3) comparing the grey value of each pixel of the images of two consecutive time points and obtaining an activity value for each image by summing up the changes over all pixels;
(4) repeating steps (1) to (3) for an activity interval of time and obtaining a sample of activity values for said activity interval of time and then extracting from said sample of activity values a statistical estimator;
(5) repeating steps (1) to (4) and comparing the value of the statistical estimator for said sample of activity values of said activity interval of time with the value of the statistical estimator of a sample of activity values of the respective activity interval of time 24 hours ago, thereby obtaining a difference value;
(6) repeating step (5) at time differences over said period of time, thereby obtaining a time series of the difference values over said period of time; and
(7) determining estrus and ovulation time of the animal from the time series of the difference values.

2. The method of claim 1, wherein the animal is a pig, a cow, a sheep, preferably a pig.

3. The method of claim 1 or 2, wherein the grey value of the image is determined within a region of interest (ROI) of said image.

4. The method of any one of claims 1 to 3, wherein the period of time is in a range from two days to one month, preferably two days to 23 days, such as three to seven days.

5. The method of any one of claims 1 to 4, wherein the time points in said period of time are in a range from every second to every hour, preferably every second to every 30 seconds, more preferably, every 5 to 20 seconds, such as every 10 seconds.

6. The method of any one of claims 1 to 5, wherein the activity interval of time is in a range from one hour to 10 hours, preferably 2 to 6 hours, such as 4 hours.

7. The method of any one of claims 1 to 6, wherein the time differences are in a range from one minute to 6 hours, preferably one minute to one hour, more preferably 10 to 45 minutes, such as 30 minutes.

8. The method of any one of claims 1 to 7, wherein one camera collects images for 4 to 5 crates,
and/or wherein further information about the animal is used, such as age, number of former pregnancies, number of offspring per pregnancy, back fat thickness.

9. The method of any one of claims 1 to 8, further comprising
(8) sending a signal that the animal is in estrus to the farmer,
(9) optional, recommending the time of insemination,
(10) optional, recommending the lowest number of inseminations possible to achieve a pregnancy in this estrous cycle; and/or
(11) optional, monitoring of health status.

10. The method of any one of claims 1 to 9, further comprising monitoring of the success of artificial insemination and/or predicting the probability of early pregnancy

11. A system for determining estrus and ovulation of an animal / for determining time for insemination, comprising
(a) at least one camera which is located above the crate or pen for monitoring at least one animal from above, which collects images at time points over a period of time;
(b) means for transferring the images to a processor;
(c) at least one processor for obtaining and comparing the grey values of the images collected with the at least one camera;
(d) a software for carrying out steps (2) to (7) of the method as defined in any one of claims 1 to 10;
(e) optional, means for sending a signal that the animal is in estrus to the farmer.

12. The system of claim 11, wherein the animal is a pig, a cow, a sheep, preferably a pig, and/or wherein the at least one camera collects images for 4 to 5 crates.

13. The system of any one of claims 11 to 12, wherein the period of time is in a range from two days to one month, preferably two days to 23 days, such as three to seven days.

14. The system of any one of claims 11 to 13, wherein the time points in said period of time are in a range from every second to every hour, preferably every second to every 30 seconds, more preferably, every 5 to 20 seconds, such as every 10 seconds.

15. The system of any one of claims 11 to 14, wherein the grey value of the image is determined within a region of interest (ROI) of said image.
